# EUROPEAN PATENT APPLICATION

(11) **EP 1 505 497 A1**
(43) Date of publication of application: **09.02.2005**
(21) Application number: 03291966.4
(22) Date of filing: 06.08.2003
(51) Int. Cl.: G06F 9/445

(54) **A method, a computer software product, and a telecommunication device for dynamically and automatically loading software components**

(71) Applicant: ALCATEL, 75008 Paris (FR)
(72) Inventor: Hoche, Michael, Dr., 71701 Schwieberdingen (DE); Szabo, Peter, Dr., 75180 Pforzheim (DE); Rössler, Horst, 70794 Filderstadt (DE)
(74) Representative: Brose, Gerhard, Dipl.-Ing.

(57) **Abstract**

The invention relates to a method for dynamically and automatically loading a software component (C1, ..., C9) of a set of required software components, the software component (C1, ..., C9) including a routine capable of performing by a second software component referenced functionality, the method comprising the steps of determining the set of required software components, determining an order of loading of the required software components, loading and integrating the required software component, where said order is determined dynamically by loading and integrating dynamically the required software component when or before the functionality is requested from the second software component. The invention further relates to a computer software product and a telecommunication device.

## Description

The present invention relates to a method for dynamically and automatically loading software components. The invention further relates to a computer software product and a telecommunication device.

An application program is a computer program designed to perform a specific function. Examples of applications include databases, Web browsers, development tools, editing programs, and communication programs. Applications use services of the computer's operating system and other supporting systems. The formal requests and means of communicating with other programs that an application program uses is called the application program interface (API).

Application programs are built from parts, herein called components. A component is an identifiable part of a larger (program) construction. A part of a component herein is called sub-component or (recursively) component, too. Usually, a component provides a particular function or group of related functions, called services. In programming design, a system is divided into components.

In object-oriented programming and distributed object technology e.g., a component is a reusable program building block that can be combined with other components in the same or other computers in a distributed network to form an application. Examples of a component include: a single button in a graphical user interface, a small interest calculator, or an interface to a database manager. Components can be deployed on different servers in a network and communicate with each other for required services. A component runs within a context, called a container. Examples of containers include e.g. pages on a Web site, Web browsers, operating systems, or word processors.

Application programs are essential parts of e.g. complex (software) systems or distributed systems. Such systems might be a user interface of e.g. a hand held or mobile, a network management system of e.g. a cross connect or any other network element like a switch or a router, or a browser application e.g. an operating system for a browser or a plug-in etc.

An operating system (OS), here also treated as an application program or computer software product, is a program that, after being initially loaded into a computer by a boot program, manages other computer programs. Application programs make use of the operating system by making requests for services through a defined API.

An operating system performs several services for applications like scheduling and dispatching of system resources, memory management, device interaction, etc.

In a computer operating system, a loader is a component that locates a given program (which can be an application or, in some cases, part of the operating system itself) e.g. in offline storage (such as a hard disk), loads it into active storage (in a personal computer, it's called random access memory), and gives that program control of the computer (allows it to execute its instructions).

A program that is loaded may itself contain components that are not initially loaded into main storage, but can be loaded if and when their logic is required. In a multitasking operating system, a program that is sometimes called a dispatcher juggles the computer processor's time among different tasks and calls the loader when a program associated with a task is not already in main storage.

Lazy loading, also known as dynamic function loading, is a mode that allows a developer to specify what components of a program should not be loaded into storage by default when a program is started. Ordinarily, the system loader automatically loads the initial program and all of its dependent components at the same time. In lazy loading, dependents are only loaded as they are specifically requested.

Such a method and apparatus for "Just-in-Time" dynamic loading and unloading of computer software libraries is known from US Patent No. 6,314,566.

A developer can enable lazy loading on a component-by-component basis in both threaded and non-threaded applications. The disadvantage of lazy loading is that if a component calls most of its dependents, every function call to a lazily loaded component requires extra instructions and time. Consequently, if a program can be expected to use most of its dependent components, then lazy loading will probably not improve performance.

There is an increasing need for a reduction of system latency and a reactivity enhancement, illustrated by annoying waiting times when activating a mobile, booting a PC, or starting a browser.

The next decade will bring a radical change to the way we do computing as applications that were at one time considered services such as large distributed databases, high-quality multimedia, and programs for massively parallel systems, become common. Although the application demands are changing substantially, the platform on which those applications run is not. Consequently, application performance is frequently limited by today's operating systems, which provide an inadequate interface to computer system services.

The key problem facing such platforms is how to support efficiently and fast a range of applications with widely varying service demands. Reactivity is an important quality dimension especially for telecommunication devices.

Applications are based on an environment, e.g. a platform, an interpreter, an operating system etc. When executing such an application the environment needs to be established in a preceding phase. This environment is typically constructed in a pre-determined order causing e.g. long initialization phases for establishing an operative environment.

This problem is solved by a method for dynamically and automatically loading a software component of a set of required software components, the software component including a routine capable of performing by a second software component referenced functionality, the method comprising the steps of:
- determining the set of required software components,
- determining an order of loading of the required software components,
- loading and integrating the required software component,
where the order is determined dynamically by loading and integrating dynamically the required software component when or before the functionality is requested from the second software component.

And the problem is solved by a computer software product comprising loading and integrating means for dynamically and automatically loading and integrating a software component of a set of required software components, the software component including a routine capable of performing by a second software component referenced functionality, the computer software program comprising determination means for determining the set of required software components and an order of loading of the required software components, where the order is determined dynamically by loading and integrating dynamically the required software component when or before the functionality is requested from the second software component.

The problem is also solved by a telecommunication device comprising a computer software product, the computer software product comprising loading and integrating means for dynamically and automatically loading and integrating a software component of a set of required software components, the software component including a routine capable of performing by a second software component referenced functionality, the computer software program comprising determination means for determining the set of required software components and an order of loading of the required software components, where the order is determined dynamically by loading and integrating dynamically the required software component when or before the functionality is requested from the second software component.

The resource demands of current and future applications can be met by a system in which services or the corresponding components can be integrated on an application-specific basis. The service component relies on low-level interfaces exported by the operating system kernel. These interfaces, which themselves can be tailored, enable the service to allocate and manage system resources such as processors, disks, networks, and memory.

The underlying idea is a new design principle: If a component is "really" required, then if the component is not already established, establish and execute the component. Instead of establishing the environment in a preceding phase the environment (including the application) is established when needed.

An minimal operating system is suggested that provides means, e.g. an interactive scheduler for detecting component requests, and means for loading and establishing components, as well as means for eliminating components, to establish components (functional parts) in the order of necessity in a dynamic way and a determinable fine granularity.

Accordingly, it is an advantage of the present invention to spread time consuming initialization processes over the execution time interval, thus increasing the reactivity and reducing latency.

Another advantage of the present invention is the reduced operative random access memory requirements.

A further advantage of the present invention is that it is easy to implement, e.g. via a design pattern or a component scheduler, well suited for non-always-on devices and applications. The invention is especially important for hand held and wearable devices where no system overhead is tolerated.

Yet another advantage of the present invention is the speed up of re-activating (large) inactive components.

The invention is described further using the following figures, where
**Figure. 1** is a schematic drawing of a prior art software system using network operating system services.
**Figure. 2** is a schematic drawing of a prior art software system using distributed network operating system services.
**Figure. 3** is a schematic drawing of a computer software product according to prior art.
**Figure. 4** is a schematic drawing of the inoperative and the operative phase of a prior art computer software product.
**Figure. 5** is a schematic drawing of the fusion of the inoperative and the operative phase using the method according to the invention.
**Figure. 6** is a schematic drawing of the inoperative and the operative phase of computer software product according to the invention.
**Figure. 7** is a schematic drawing of the inoperative and the operative phase of a computer software product according to the invention.

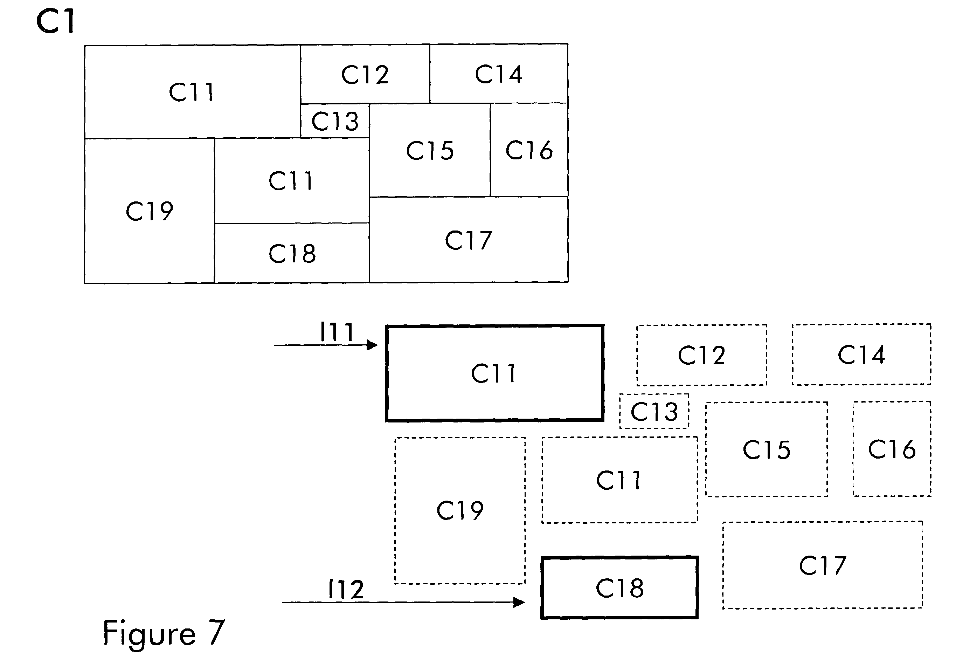

**Figure. 7** is a schematic drawing of the decomposition of a component into its (functional) parts performed by the method according to the invention.
**Figure. 8** is a pseudo-code fragment implementing the method according to the invention.

Application domains, such as multimedia, databases, and parallel computing, require (operating system) services with high performance and high functionality. Existing operating systems provide fixed interfaces and implementations to system services and resources. This makes them inappropriate for applications whose resource demands and usage patterns are poorly-matched by the services provided.

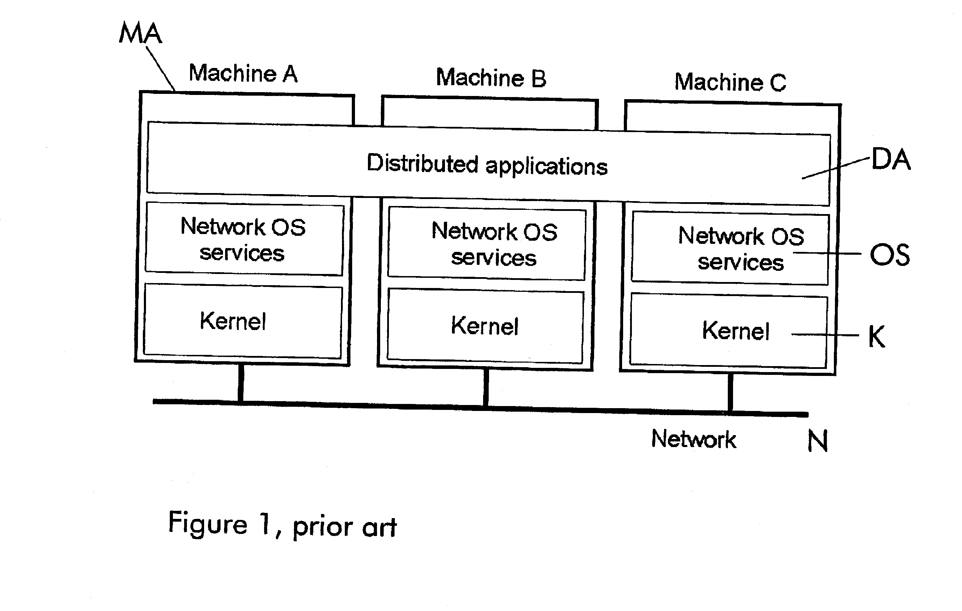

Figure 1 shows three machines MA, each machine comprising an operation system kernel K, based on that kernel K a layer comprising network operation system services OS, e.g. dynamic link libraries, that are commonly used by a distributed application layer DA. The machines MA communicate via a network layer N.

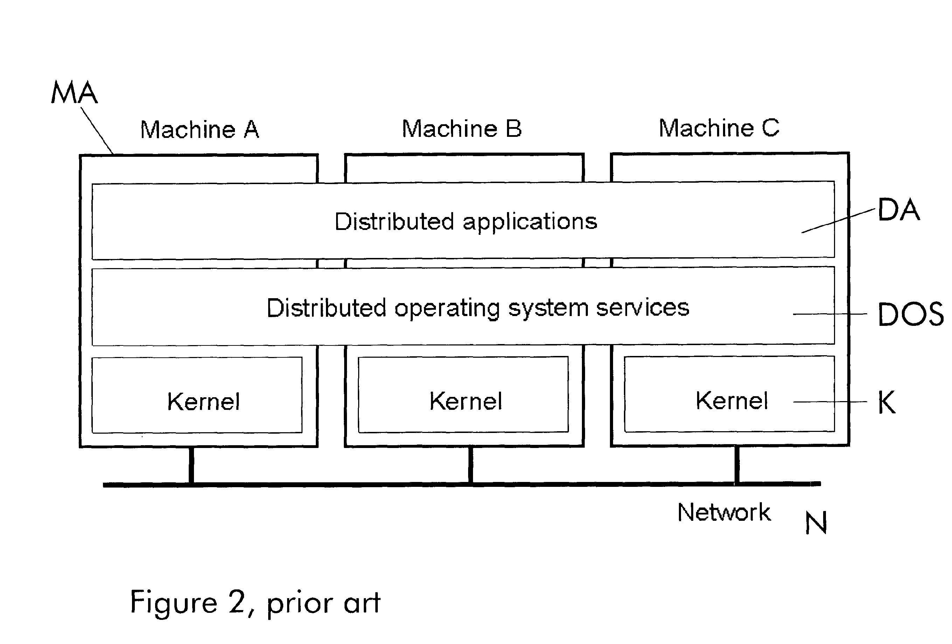

Figure 2 shows an evolution step. There also the three machines MA are shown, each machine comprising an operation system kernel K, too. Based on that kernel there is a layer comprising now distributed network operation system services DOS, e.g. shared dynamic link libraries or web services, that are distributed commonly used by a distributed application layer DA. And the machines MA remain communication over the network layer N.

The figure illustrates how the services DOS evolve. The services DOS becomes a living network of inter-linked services like an organism. A new service is developed by (re-)using available services and gluing them together to a new service providing a certain new functionality. In this evolution the kernels K remain as basis.

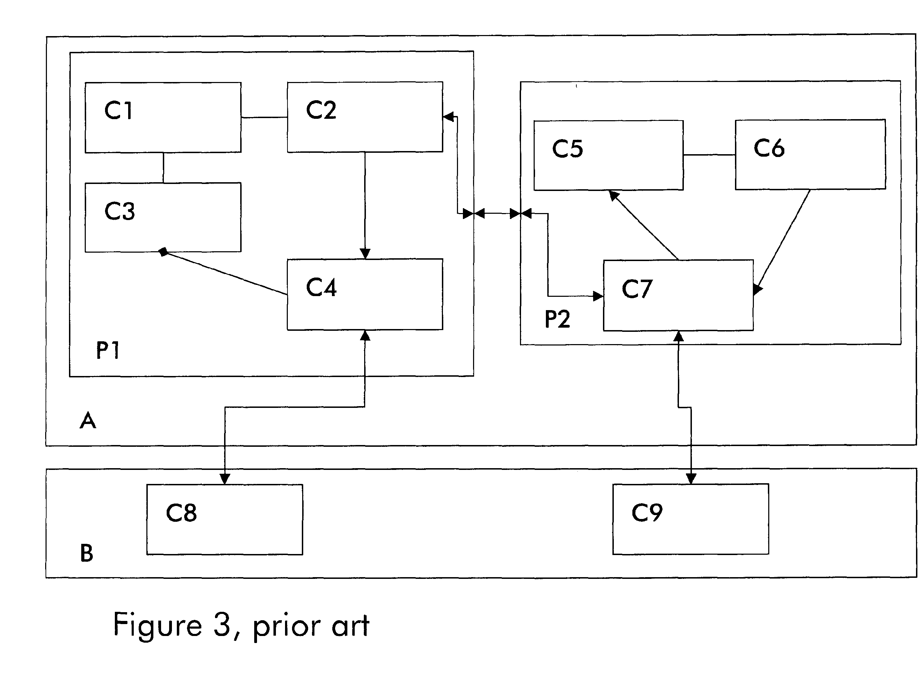

Figure 3 shows an application A comprising two processes P1 and P2, each of them comprising several components C1, C2, ... C7. The application A is based on an operating system B also comprising components C8 and C9. The components C1, C2, ... C9 as well as the processes P1 and P2, the application A and the operating system B communicate, illustrated by the arrows. The arrows correspond to inter (process) communication, application programming interfaces, and operation system (service) interfaces etc.

The figure illustrates especially the (part-whole) relationship between applications, operating system, and components.

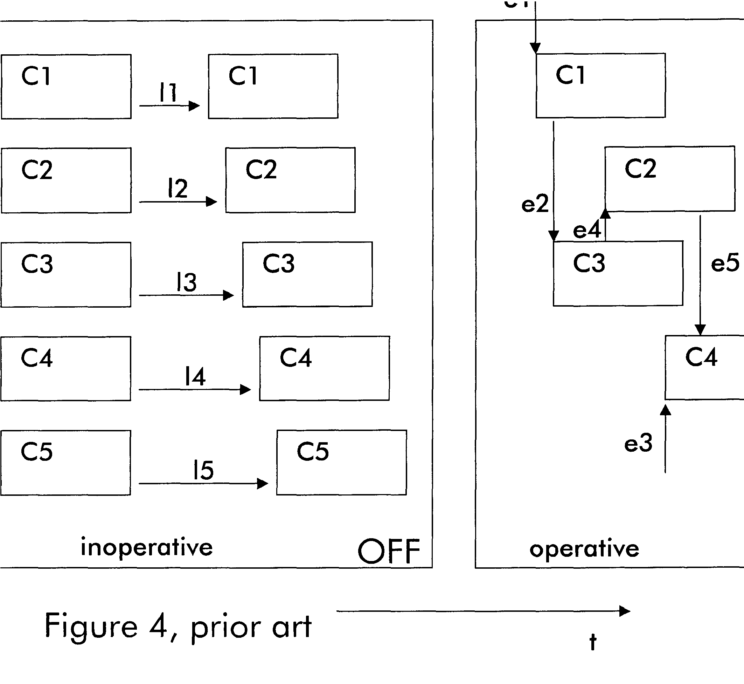

Figure 4 shows how the static structure shown in figure 3 is enlivened. The components C1, C2, ... C5 need to be brought from an inoperative state, illustrated by the rectangle with the label OFF, to an operative state. This transition is called loading within this application. Loading might comprise the transfer of components into memory or the conversion e.g. by a just-in-time compiler into a form usable in the operative phase. It is the transition from an inoperative form into an operative one. Each component C1, C2, ..., C5 is loaded illustrated by the arrow I1, I2, ... I5, respectively. When this is done the operative phase, illustrated by the right rectangle labeled ON, starts. There the execution runs through the operative components (control flow), illustrated by an execution sequence e1, e2, ..., e5. The execution sequence shows that a first component C1 contains the start e1 of the execution sequence e1, e2, ..., e5. Within the first component C1 a second component's C3 functionality is required, illustrated by the arrow e2, the second component C3 needs functionality from the third component C2, illustrated by the arrow e4. A second (parallel) control flow is shown by the start arrow e3 to component C4. The last arrow e5 shows another usage of the component C4.

The figure shows especially that the component C5 is not needed in the current execution sequence.

An operating system according to the invention enables system services, i.e. components, to be defined in an application-specific fashion through an extensible micro-kernel. It offers fine-grained control over a machine's or an environment's logical and physical resources to applications through run-time adaptation of the system to application requirements.

The operating system addresses the requirements of the coming generation of resource-intensive applications. These requirements are achieved through the use of application-specific dynamically configured service components (functionality).

An application-specific service is one that precisely satisfies the functional and performance requirements of an application or class of applications. Application-specific services might be integrated dynamically in an adaptable kernel that enables system resources to be efficiently managed by an application. Efficient means that capable applications execute more quickly and with less programming complexity than when using a more conventional platform, such as an operating system like UNIX, Windows or Mach or a browser environment like Netscape or Internet Explorer.

An application specifies a service as an implementation partitioned into three components: an application-level component, which is linked into the application's resource (e.g. memory or address space), a kernel-level component, which provides fast, access to in-kernel services (e.g. an operating system kernel or a browser (operating) system), and a usage-level server component, which manages long-lived service state (which service component is used in which life phase of the application usage).

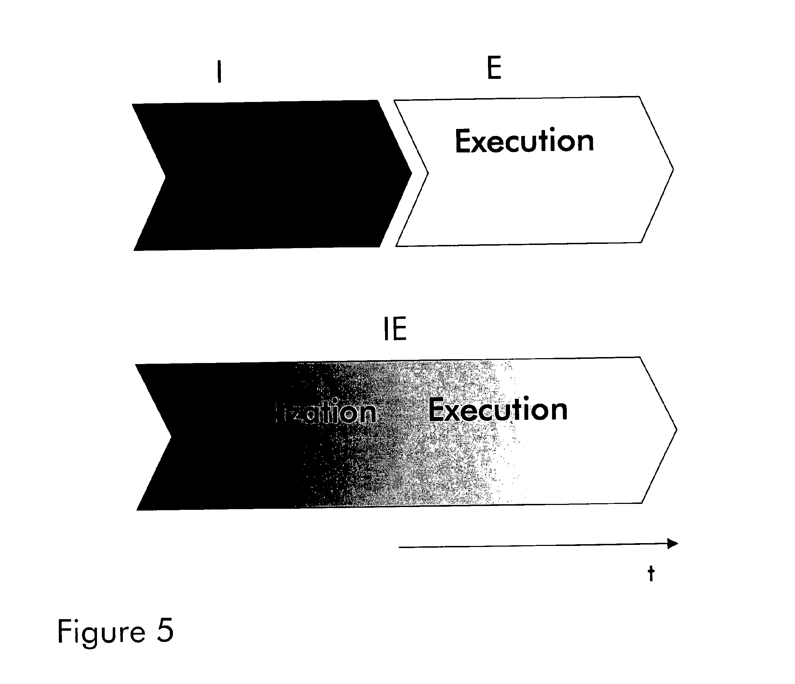

The method according to the invention is illustrated in figure 5. There in the upper half of the figure the prior art initialization (loading) phase I and execution phase E is separated. Using the smart loading of components the situation changes, shown in the lower part of the figure. There the initialization and the execution fuse into each other, which is illustrated by a common phase IE.

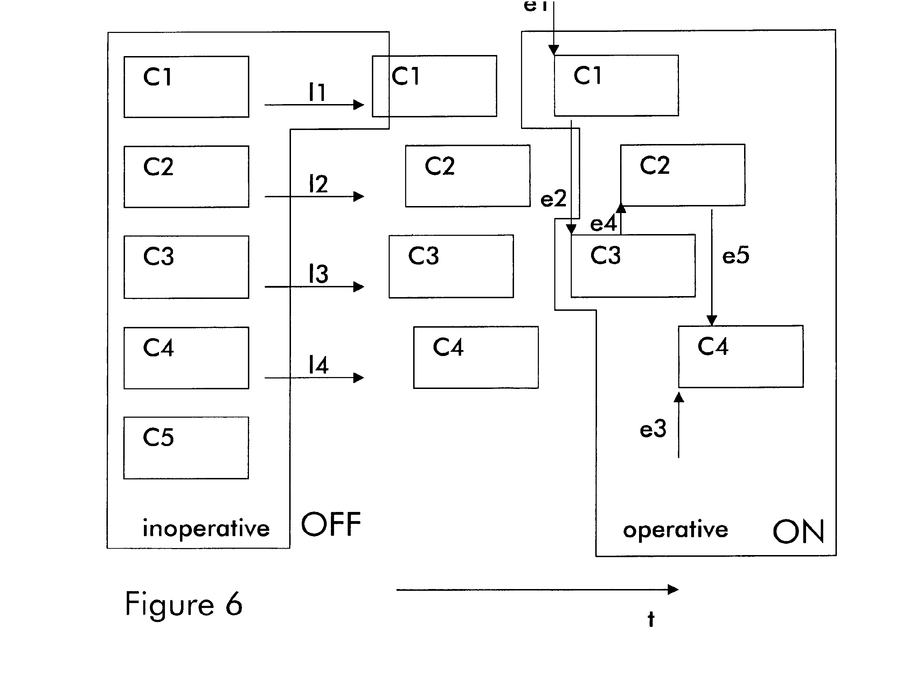

Figure 6 shows the effect when applying the method according to the invention to the scenario shown in figure 4. Loading and execution is coordinated. The first component C1 is loaded I1 for the execution start e1. The component C1 becomes immediately operative, as shown by the polygon labeled ON. By the second execution e2 the component C3 becomes operative, which is while executing the first component loaded I3. When the next component C2 is called in execution e4 it is already loaded I2, etc.

The figure illustrates that the components are loaded when needed, in a way that is determined by execution. The loading of component C5 is avoided.

The service or to be more precisely the service component might even be partitioned according to the usage of its functionality in a dynamic way. Similarly, the service might be integrated accordingly. The way in which the service is partitioned or integrated is also determined by its safety, sharing, and performance requirements etc. The dynamic composition and decomposition yield to a morphing software architecture that is usage driven.

This idea is illustrated in figure 7. There a component C1 comprises several parts C11, C12, C13, ..., C19, e.g. routines or sub-modules. These parts are desintegrated and only the necessary (for execution) parts C11 and C18 are loaded. This is illustrated by the loading transitions I11 and I12 as well as the bold faced rectangles forming the two loaded parts C11 and C18.

The further technical effect is that the software becomes self-organizing, dynamically structured depending on the execution path.

Figure 8 shows a pseudo code interpreter loop realizing the method according to the invention. The interpreter loop comprises a call context 5 wherein four command evaluations 4, 3, 2, and 1 are executed.
The call context 5 has to execute an expression E with loading requirements L. This is done by executing the four command evaluations 4, 3, 2, and 1. The first command evaluation 4 identifies an (one or multiple) unavailable functionality F, i.e. unloaded components, and if there are such then the functionality is made available by first identification of the respective component or the part of the component, i.e. the sub-component that provides the functionality F, and in a second step (preferred concurrently) loading and integrating the required sub-components C. The second step 3 is optional and removed not required functionality, i.e. sub-components, from the loading requirements L. The third step 2 embeds the altered loading requirements into the expression, e.g. by establishing a permanent link. In the last step 1 the expression E is finally evaluated.

There are certain similarities to the eval-loop known from LISP like programming language. There several compiler techniques are known to compile self-modifiable code allowing to avoid interpreter loops within the target implementation. It should be noted that C like languages do not provide these compilation techniques for altering dynamically code as it is for instance done with higher order functional, while execution.

A central part is a germinal of the above described operating system, e.g. called micro-kernel. The micro-kernel exports interfaces that offer applications fine-grained control over a few fundamental system abstractions, such as processors, memory, and input/output devices. It is extensible in that application programs and operating system (services) itself can install program sequences that execute in the kernel in response to hardware and software events, such as processor exceptions and context switches.

The solution of the reactivity performance problem is enabling applications to adapt the behavior (interface and implementation) of system services to realize maximum performance by e.g. changing required careful and deliberate modifications of the operating system kernel.

Adaptability is achieved with an extensible micro-kernel that allows an application to specify a service as an implementation partitioned into an application component, an application-specific kernel component, and possibly a user-level server component.

The micro-kernel provides lightweight and portable abstractions of the physical hardware such as threads and virtual address spaces which are used by the higher-level services. By allowing applications to participate in the implementation of high-level services, applications make informed decisions about their resource requirements. By placing the implementation within an application component or a kernel-level code sequence, the service can be accessed with low latency. The application-specific kernel components are real dynamically loaded extensions, and enable applications to define the precise interface and implementation for kernel services that they require. These enable a service to be partitioned across the user/kernel boundary in the most efficient manner that still satisfies its availability and sharing requirements.

Specifically, installing code at the kernel level allows for flexible and rapid response to system hardware and software events. For example, an application program can install a code sequence that ensure system-wide or application-wide invariants about preemptability. The application e.g. can enforce constraints that deny priority inversion.

Micro-kernel technology has been promoted as a solution to many of the adaptability requirements of demanding applications. Current practice is to structure a micro-kernel based operating system as one or more server address spaces that collectively implement operating system services.

Such an operating system kernel offers two general functions: it provides abstractions of the system's physical and logical resources, and it implements a set of management policies for those resources.

Although the operating system's structure according to the invention is similar to that of a traditional micro-kernel, providing interfaces to services such as threads, address spaces, and memory, the similarity is only superficial. In a conventional micro-kernel, the highest-level system services are implemented as a set of layered abstractions, with the highest layer exporting a few basic interfaces.

Applications built to the micro-kernel interface are consequently constrained to using the services at the highest layer. While these services may be composed to provide a rich set of higher-level abstractions, e.g. a UNIX process under Mach is defined through a composition of an address space, some memory, and a thread, the low-level behavior of each abstraction is essentially fixed.

In contrast high-level interfaces required by applications and application-specific services are highly dynamically realized by the method according to the invention. A program defines its own interface and service set. For example, a program can construct a service that provides an interface for creating and then starting a new thread of control. The service itself might use more primitive interfaces, e.g. create a thread, allocate a stack, set initial thread state, start thread, etc. to accomplish this.

At a basic level, this method can be used to define the implementation of a traditional system call, serving as a wrapper around underlying kernel services. At a more sophisticated level, this method enables an application to monitor and react to changes in global resource allocation without involving costly transfers to user-level code. With this structure, high-level operating system services, such as filing, networking, virtual memory management, and fine-grained thread management, can be efficiently implemented as part of each application's address-space instead of as part of the kernel or a dedicated server.

Micro-kernel-based systems reflect a tension between modularity and efficiency. Services are moved out of the kernel to user-space to achieve higher modularity, but additional overhead for communication is incurred whenever the services are accessed. This overhead can be greatly reduced by allowing parts of a service to be located in the address spaces that use them.

Such an operating system interface is like a programming language in that it defines a primitive set of operations available to the programmer. The operating system interface is in fact an actual programming language through which applications can define and install new interfaces that match their requirements.

Parts are compiled into an executing system at run-time. Aggressive compiler technology might be applied to ensure that the micro-kernel extended with user-defined services performs as well as a non-extensible monolithic operating system with services built-in to the kernel. Good performance can be achieved with well-understood optimizing compiler technology, such as intra-procedural data flow analysis, symbolic evaluation, and inline expansion. These techniques can eliminate much of the overhead of the extension language: the compiler can inline-expand calls to kernel operations, replacing them with direct data structure accesses or even constants, and the compiler can attempt to evaluate predicate expressions guarding kernel operations in the context of the spindle code preceding the call.

Advanced compilation technology, such as partial evaluation can blend together multiple service routines and the surrounding kernel code to reduce the overheads of maintaining large numbers of services. It can also reduce the cost of crossing from the kernel's execution environment to the service's. Partial evaluation is a program transformation technique that specializes program code with respect to some of its argument values.

The method according to the invention targets and is applicable for general purpose (high-performance) computing as well as for multi media applications.

Multimedia applications, such as video-conferencing, virtual reality, and interactive learning, impose special demands on the scheduling, communication and memory allocation policies of an operating system. In general, real-time systems implement a simple fixed priority ordering. Conventional operating systems, however, support either a single scheduling policy to arbitrate among competing activities, or multiple policies that promote fairness but favor interactive activities. Some systems provide multiple scheduling policies but only from among a few fixed policies set at kernel-build time. Flexible, application-specific scheduling, though, has been shown to provide critical performance benefits for both time-constrained and non real-time activities. In terms of memory resources, multimedia applications use large amounts of data e.g. for audio and video streams, with access patterns that interact poorly with locality-based page replacement algorithms.

Application-specific virtual memory management policies can solve this problem. High-level information about media direction, edit cuts, and temporal constraints are directly relevant e.g. to page replacement decisions. When presenting a video stream, for example, an application can sequentially prefetch video frames directly from disk into memory resident buffers. Information about synchronization between media streams can also be specified to prevent unnecessary replacement of pages that are interdependent.

Using dynamic loading, cashing and integrating of software components is an established technology in browsers or JAVA applications that is not consequently applied. For instance it is known from an Internet browser that for viewing a resource the components of the resource appear as soon as they are available and the components are cashed for a time period in order to avoid re-loading. This principle applies to HTML pages, as well as to embedded technology like images, applets, or plug-ins.

A minimal browser operating system, e.g. a browser micro-kernel might provide means, e.g. an interactive scheduler for detecting component requests, and means for loading and establishing components, as well as means for eliminating components for presenting applications like dynamic web-pages, interactive plug-ins, or rich content (active) multimedia.

The browser system will build up itself according to the (order of) requests, priority, and necessity - growing smoothly to a full functional application by integrating components to its kernel. The described method eliminates the long initialization phase for establishing user interface, functional components, connections etc. when running a browser system.

Similarly the technique is applicable for operating systems like Windows or UNIX etc. that also require long boot phases for establishing the system environment. While establishing mostly they show a user a busy/loading screen.

Applying of the principle according to the invention would reorder the establishment of components (fine granulated objects) with respect to a real user/client demand.

A browser with a minimal browser operating system could for instance establish a functional browser skeleton with a coarse user interface providing base functionality to a user, instead of wasting the users' time with unnecessary activities of lower importance etc.

A terminal telecommunication device such as a mobile, a handheld, a personal computer or a simple telephone has to cope with user interface requirements. A user does not tolerate any latency - neither in an initialization phase, e.g. a booting terminal etc, nor in a execution phase. There are certain real time requirement. These requirements are propagated to all other communication system parts, herein generally called telecommunication devices, such as switches, servers, hubs, bridges, routers, etc. Since these devices are software driven, the method according to the invention is applicable in order to increase the performance of the whole system.

## Claims

1. A method for dynamically and automatically loading a software component (C1, ..., C9) of a set of required software components, the software component (C1, ..., C9) including a routine capable of performing by a second software component referenced functionality, the method comprising the steps of:
- determining the set of required software components,
- determining an order of loading of the required software components,
- loading and integrating the required software component,
**characterized in that** said order is determined dynamically by loading and integrating dynamically the required software component when or before the functionality is requested from the second software component.

2. The method according to claim 1, **characterized by** further comprising a step of extracting and integrating sub-components (C11, C18) from the software component (C1) providing said requested functionality.

3. The method according to claim 1, **characterized in that** said determining is adaptive based on earlier executions functionality requests.

4. A computer software product comprising loading and integrating means for dynamically and automatically loading and integrating a software component (C1, ..., C9) of a set of required software components, the software component (C1, ..., C9) including a routine capable of performing by a second software component referenced functionality, the computer software program comprising determination means for determining the set of required software components and an order of loading of the required software components, **characterized in that** said order is determined dynamically by loading and integrating dynamically the required software component when or before the functionality is requested from the second software component.

5. The computer software product according to claim 4, **characterized by** further comprising decomposition and integration means for extracting and integrating sub-components (C11, C18) from the software component (C1) providing said requested functionality.

6. The computer software product according to claim 4, **characterized by** comprising germinal extensible part providing a minimal functionality and comprising said determination means and loading means.

7. The computer software product according to claim 4, **characterized in that** said computer software product implements an operating system service.

8. The computer software product according to claim 4, **characterized in that** said computer software product implements a Web browser.

9. The computer software product according to claim 4, **characterized in that** said computer software product implements an application.

10. A telecommunication device comprising a computer software product, the computer software product comprising loading and integrating means for dynamically and automatically loading and integrating a software component (C1, ..., C9) of a set of required software components, the software component (C1, ..., C9) including a routine capable of performing by a second software component referenced functionality, the computer software program comprising determination means for determining the set of required software components and an order of loading of the required software components, **characterized in that** said order is determined dynamically by loading and integrating dynamically the required software component when or before the functionality is requested from the second software component.
